# EUROPEAN PATENT APPLICATION

(11) **EP 0 799 782 A2**
(43) Date of publication of application: **08.10.1997**
(21) Application number: 97104030.8
(22) Date of filing: 11.03.1997
(51) Int. Cl.: B65G 67/60, B65G 17/12

(54) **Bucket elevator**

(30) Priority: 05.04.1996 IT GE960026
(71) Applicant: TECHINT COMPAGNIA TECNICA INTERNAZIONALE S.P.A., I-20121 Milano (IT)
(72) Inventor: De Capitani di Vimercate, Ernesto, 16132 Genova (IT)
(74) Representative: Porsia, Bruno

(57) **Abstract**

Bucket elevator, comprising a plurality of buckets which are connected together to form a continuous element, which elevator is located on an essentially straight frame fitted at one end with at least one driving pulley and at the opposite end with at least one deflection pulley, the said frame being in a vertical or almost vertical position, with its upper end attached to a preferably self-propelled supporting structure, and its lower end forming the hanging end of the elevator; the said hanging end has at least one articulated segment, the axis of the said articulation being parallel with the axis of the said drive and deflection pulleys, and the said articulation being fitted with means for adjusting the inclination of the said articulated segment with respect to the said frame of the elevator.

## Description

The present invention relates to bucket elevators, and in particular to the bucket elevators employed in machinery for unloading materials from ships.

Bucket elevators are used in numerous applications where the material to be transferred involves no risk of breaking or being crushed, in particular, that is, when unloading minerals and earth materials, but also grain and seeds; such devices are especially used to unload materials whose consistency rules out the use of pneumatic type means. A typical problem encountered with these elevators is the difficulty inherent in placing the material to be transported within reach of the buckets without excessive energy and financial expenditure. Generally speaking, the material is pushed towards the elevator, or alternatively its hanging end is swung over to the surface from which the material is to be lifted, however, difficulties arise in terms of the accessibility of some of the places where the material is stored, for example holds in ships.

The object of the invention is to provide an elevator which transports the material to be transferred with improved efficiency and allows greater access to it.

The subject of the present invention is therefore a bucket elevator, comprising a plurality of buckets which are connected together to form a continuous element, which elevator is located on an essentially straight frame fitted at one end with at least one driving pulley and at the opposite end with at least one deflection pulley, the said frame being in a vertical or almost vertical position, with its upper end attached to a preferably self-propelled supporting structure, and its lower end forming the hanging end of the elevator, characterized in that the said hanging end has at least one articulated segment, the axis of the said articulation being parallel with the axis of the said drive and deflection pulleys, and the said articulation being fitted with means for adjusting the inclination of the said articulated segment with respect to the said frame of the elevator.

In one embodiment, the said hanging end of the elevator has two consecutive articulated segments, the articulations of which both have their respective axis parallel with the axis of the said driving and deflection pulleys, and are both fitted with inclination adjustment means.

Advantageously, these articulated segments can be of variable length. Moreover, means may be provided for taking up the slack in the continuous bucket element, these means being positioned at the upper end of the said elevator.

Additional advantages and features will become apparent from the following description of an embodiment of the present invention, given by way of non-limiting example with reference to the appended drawings, in which:
Figure 1 is a perspective view of a naval unloading plant employing a bucket elevator according to the present invention;
Figure 2 is a perspective view of the elevator according to the invention; and
Figures 3 to 11 illustrate a series of side views of the hanging end of the elevator of the invention, in a series of possible configurations.

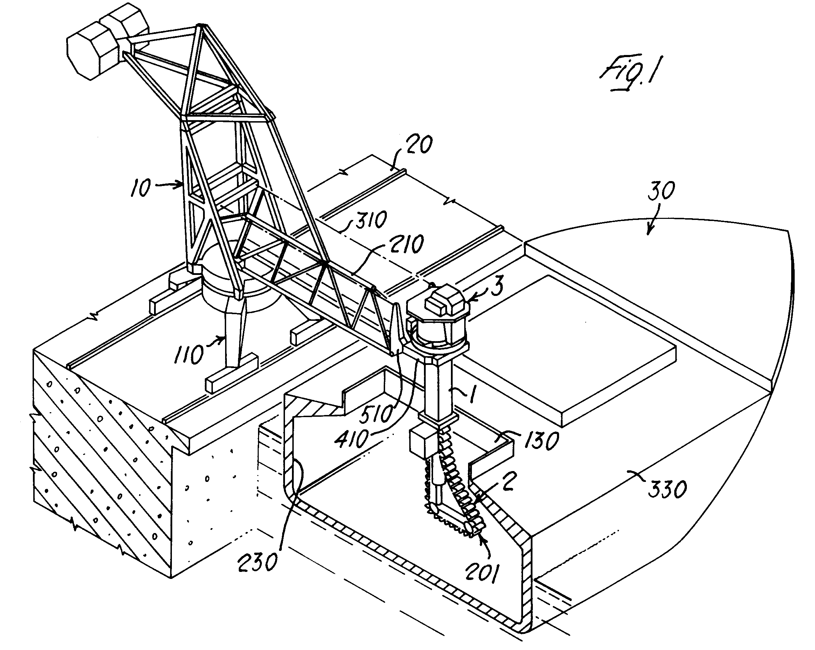

Figure 1 illustrates a naval unloading plant employing an elevator according to the invention. The crane 10, which is rotatably mounted on the carriage 110 and able to move along the wharf 20 where the ship 30 is docked, has the arm 210, the free end of which is connected, via the support 410 which is hinged to the arm 210, to the elevator according to the invention. The support has uprights 510, the free ends of which are connected to the tension cables 310, the purpose of which will be described below. The elevator comprises a straight frame 1, the upper end 101 of which is connected to the support 410 of the arm 210, while the opposite end 201 forms the hanging end of the elevator; the continuous bucket 102 element 2 is located on the said frame 1. The elevator is shown lowered into the cargo hatches 130 of the ship 30 which lead down to the ship's holds 230, so that it can unload the materials contained therein.

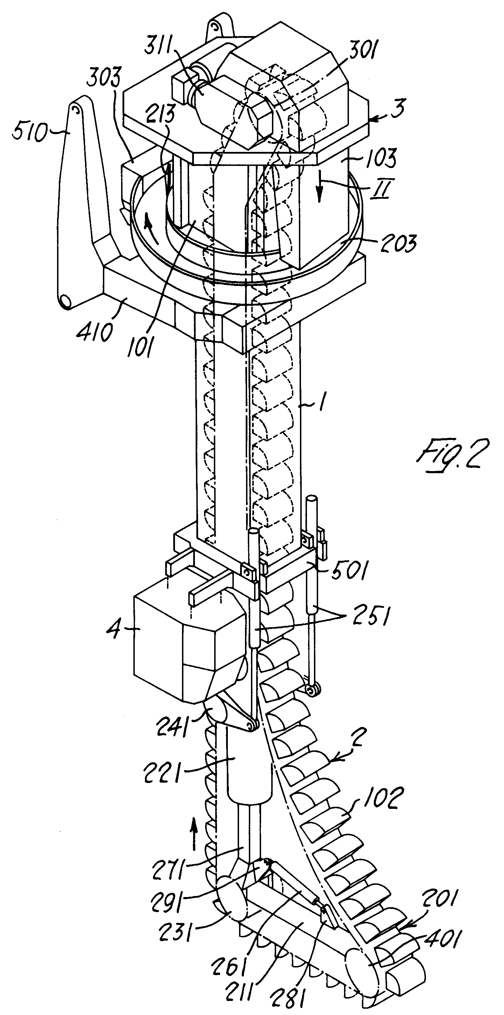

Figure 2 illustrates the bucket elevator according to the invention. This elevator, as described previously, has a straight frame 1, the upper end 101 of which is connected to the support 410 of the arm 210 of the crane 10. At this end the frame 1 has a pulley 301 fitted with drive means 311. Located above the said end is the device 3 for collecting the material tipped out of the buckets 102 of the continous element 2 in the direction of the arrow II. This device comprises a hopper 103 which unloads the material on to a rotary plate 203 fitted with a fin 213, the said plate having a discharge outlet 303.

At its hanging end 201, the frame has two adjacent articulated segments 221 and 211. The segment 221 comprises a jack that is connected at one end to the frame 1 via the articulation 241 and has a rod 271 which, at its opposite end, is connected to the segment 211 via the articulation 231. The free end of the said segment 211 is fitted with the pulley 401 which deflects the continuous bucket 102 element 2; similarly, the articulation 231 also acts as a deflection pulley.

The articulation 241 is controlled by means which adjust its inclination with respect to the frame 1, in particular the jacks 251. The inclination of the Segment 211 with respect to the segment 221 is in turn controlled by the jack 261, one end of which is connected to the extension piece 281 projecting from the lateral surface of the segment 211, while the other end is connected to the extension piece 291 projecting from the end of the rod 271 of the segment 221. An operator's cabin 4, in which the operator who controls the elevator sits, is attached to the frame 1, in the vicinity of the articulation 241.

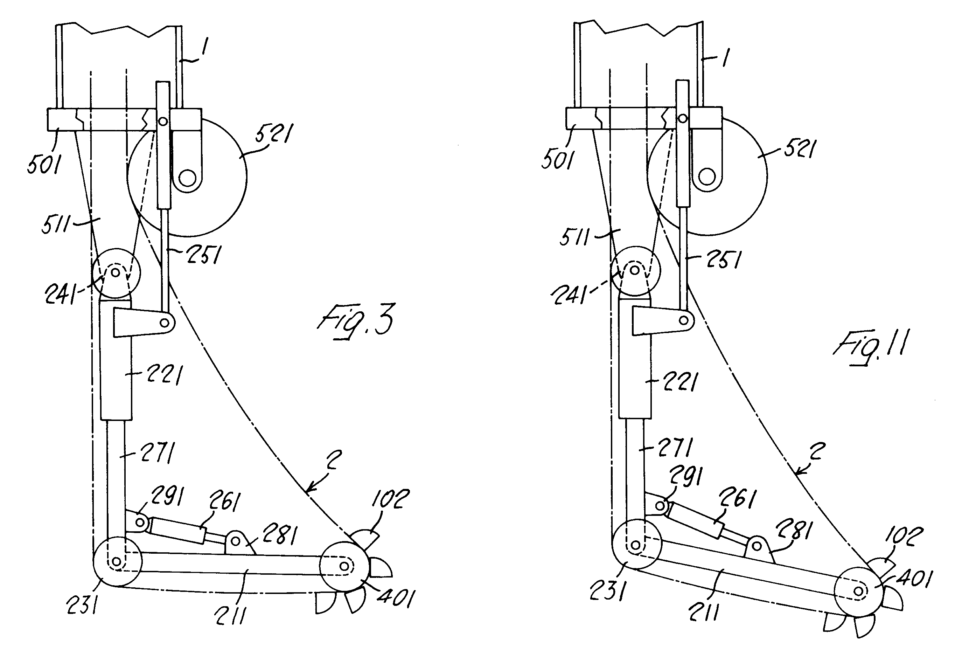

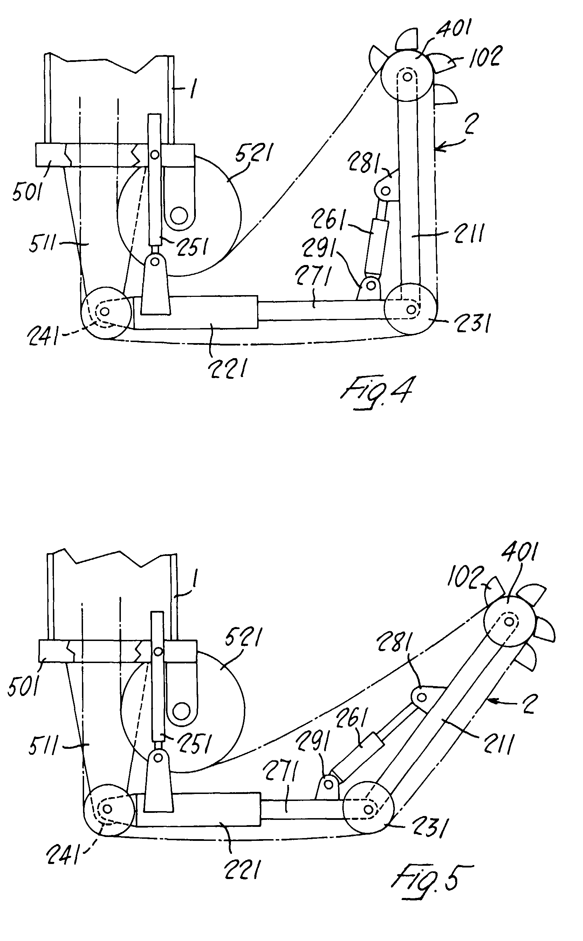

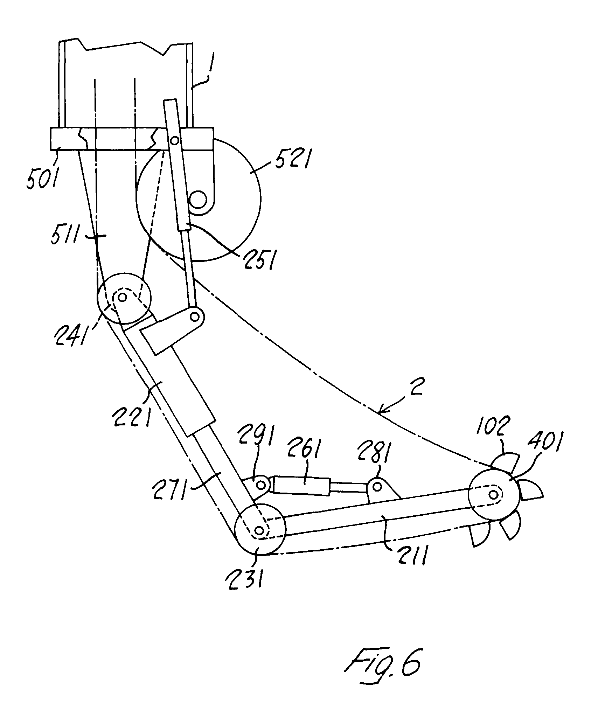

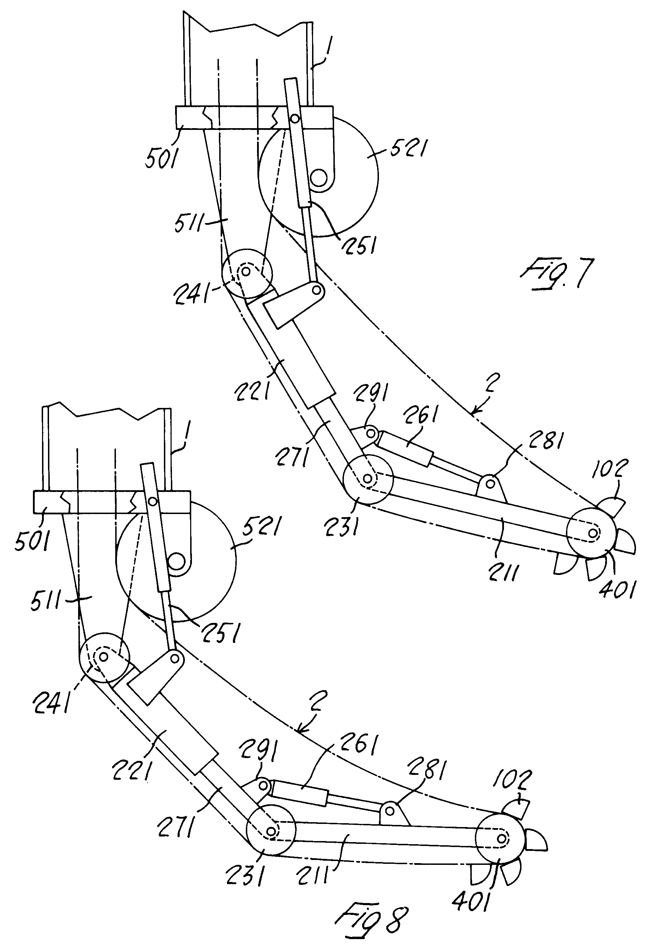

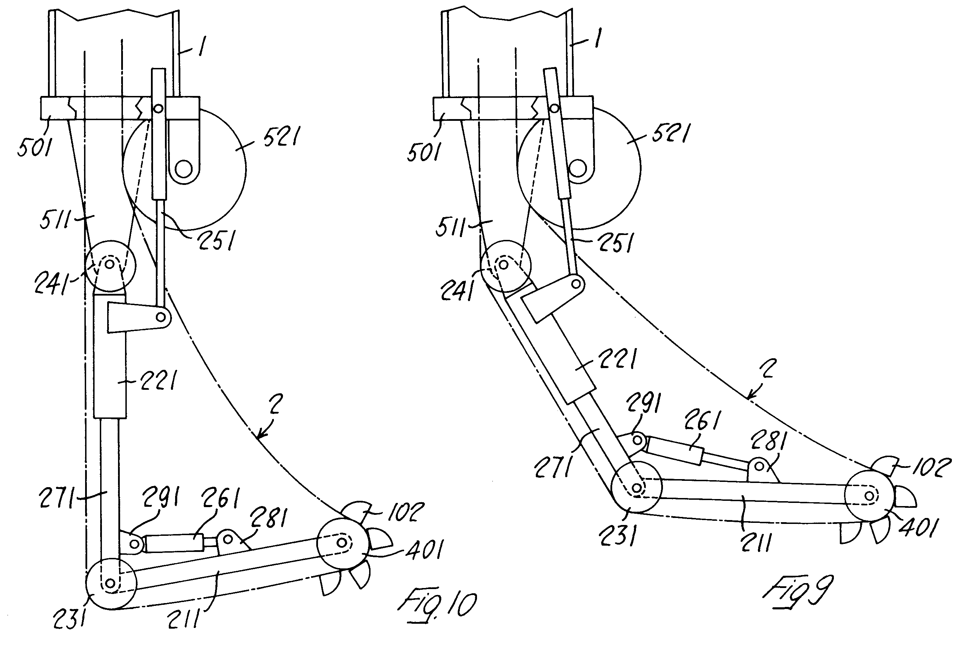

Figures 3 to 11 illustrate side views of the hanging end 201 of the bucket elevator, in a series of different configurations assumed during the course of its operation. The lower end of the frame 1 has a plate 501 from which extends a bracket 511 which is connected, via the articulation 241, to the articulated segment 221 already described previously. A pulley 521 which deflects the continuous bucket 102 element 2 is also connected to the said plate, in such a way that it can rotate freely. One end of the jack 251, already described previously, is connected to the said plate 501 while the other end is connected to the said articulated segment 221.

The way in which the elevator according to the present invention works will be described below. The articulated hanging end 201 of the elevator is inserted into the cargo hatch 130 of the hold 230, essentially in the position illustrated in Figure 3. In this position the buckets 102 on the continuous element are able to come into ample contact with the surface of the material which is to be transferred out of the hold. The elevator is inserted into the hold in a way known per se, by changing the inclination of the arm 210 of the crane 10. By virtue of the action of the tension cables 310 connected to the uprights 510, the support 410 supports the elevator in a vertical position as it is lowered and moved into the working position, independently of the inclination of the arm 210. The elevator is also able to rotate about the axis of the frame 1 and is, for this purpose, fitted with suitable drive means (not shown in the figures) which enable it to sweep over a broad surface. Even so, this mobility, combined with that of the supporting structure - that is to say the crane 10 and its arm 210 - is not sufficient to allow access to all parts of the hold.

In order to enable such access, the end 201 is fitted with the two articulations 211 and 221 which, in the manner set forth below, allow the geometry of the hanging end 201 to be varied so as to faciliate collection of the material. In addition, there is also the possibility of varying the length of one of the two articulated segments, the segment 221, which increases the number of possible configurations that can be assumed by the hanging end 201. Needless to say, this possibility can be applied to both articulated segments, just as it is possible to envisage a hanging end fitted with more than two articulated segments.

Under the control of the operator in the cabin 4, the means 251 and 261 for adjusting the inclinations of the two articulated segments 221 and 211 respectively, and the jack of the segment 221 which controls the extension of the rod 271, can be actuated to vary the configuration of the hanging end 201. Therefore, the configuration illustrated for example in Figure 4 will, for example, enable the material to be removed even when the latter forms compacted vertical walls in which it would otherwise be difficult to make any headway. As it is moved progressively into the various positions illustrated in Figures 3 to 11, the end 201 makes it possible to collect the material from the hold with an extremely high unloading efficiency. It should in particular be noted, in Figures 7 to 9, that the hanging end thus has such a high degree of mobility that, contrary to what is often the case in known unloading plant, there is virtually no need for any additional intervention in the hold to push the material closer to the hanging end.

All the means for driving the articulated segments are controlled by a single control unit, for example a pneumatic control unit, which is in turn controlled by a processor. In order to keep the tension of the continuous element 2 constant, take-up means are advantageously provided, preferably at the end of the frame 1 connected to the support 410 of the arm 210, these take-up means (not shown in the appended figures) also being controlled by the control unit that controls the means for adjusting the articulations of the articulated segments.

The bucket elevator thus envisaged makes it possible to collect the material and transfer it much more quickly and efficiently than is the case with similar devices of known type.

## Claims

1. Bucket elevator, comprising a plurality of buckets which are connected together to form a continuous element, which elevator is located on an essentially straight frame fitted at one end with at least one driving pulley and at the opposite end with at least one deflection pulley, the said frame being in a vertical or almost vertical position, with its upper end attached to a preferably self-propelled supporting structure, and its lower end forming the hanging end of the elevator, characterized in that the said hanging end has at least one articulated segment, the axis of the said articulation being parallel with the axis of the said drive and deflection pulleys, and the said articulation being fitted with means for adjusting the inclination of the said articulated segment with respect to the said frame of the elevator.

2. Bucket elevator according to Claim 1, characterized in that the said frame can rotate with respect to the said supporting structure and is fitted with means that drive it in rotation with respect to its vertical axis.

3. Bucket elevator according to Claim 1 or 2, in which the said articulated segment is of variable length and is fitted with means for adjusting the said length.

4. Bucket elevator according to any one of Claims 1 to 3, in which the said elevator additionally comprises means for taking up the slack in the continuous bucket element, preferably positioned at the upper end of the said elevator.

5. Bucket elevator according to any one of the preceding claims, in which the said hanging end has two adjacent articulated elements, at least one of which is of variable length.
